# EUROPÄISCHE PATENTSCHRIFT

(11) **EP 1 501 698 B1**
(45) Veröffentlichungstag und Bekanntmachung des Hinweises auf die Patenterteilung: **23.11.2005**
(21) Anmeldenummer: 03722278.3
(22) Anmeldetag: 08.04.2003
(51) Int. Cl.: B60N 2/07, B60R 22/26

(54) **SCHIENENLÄNGSFÜHRUNG FÜR EINEN KRAFTFAHRZEUGSITZ**
LONGITUDINAL GUIDE RAIL FOR A MOTOR VEHICLE SEAT
GLISSIERE LONGITUDINALE A RAILS POUR UN SIEGE DE VEHICULE AUTOMOBILE

(30) Priorität: 30.04.2002 DE 10220951; 24.10.2002 DE 10250212
(43) Veröffentlichungstag der Anmeldung: 02.02.2005
(73) Patentinhaber: Brose Fahrzeugteile GmbH & Co. KG, Coburg, 96450 Coburg (DE)
(72) Erfinder: RAUSCH, Peter, 96450 Coburg (DE); HOFMANN, Jochen, 96257 Marktgraitz (DE); SUCK, Wolfgang, 96450 Coburg (DE); SCHWERDTNER, Christina, 96465 Neustadt (DE); BAUERSACHS, Andrea, 96237 Ebersdorf (DE); BAUDLER, Matthias, 96450 Coburg (DE)
(74) Vertreter: Baumgärtel, Gunnar
(86) Internationale Anmeldenummer: PCT/DE2003/001224
(87) Internationale Veröffentlichungsnummer: WO 2003/093052

(56) Entgegenhaltungen:
- DE-A- 19 900 941
- DE-U- 20 115 164
- US-A- 4 262 963

## Beschreibung

Die Erfindung betrifft eine Schienenlängsführung für einen Kraftfahrzeugsitz nach dem Oberbegriff des Patentanspruchs 1 bzw. des Patentanspruchs 14.

Eine derartige Schienenlängsführung umfasst zwei längserstreckte, ineinander greifende Führungsschienen, von denen die eine entlang der anderen in Schienenlängsrichtung verschiebbar ist und die zur Einstellung der Sitzlängsposition eines Kraftfahrzeugsitzes dienen; einen Haltewinkel für ein Gurtschloss, der an der einen, verschiebbaren Führungsschiene festgelegt ist; einen in der einen Führungsschiene vorgesehenen Schlitz, durch den ein Befestigungsabschnitt des Haltewinkels in einen von den beiden Führungsschienen umschlossenen Raum geführt ist; eine Befestigungsstelle, an der der Befestigungsabschnitt des Haltewinkels mit der einen Führungsschiene verbunden ist; sowie eine Kraftangriffstelte an einem Halteabschnitt des Haltewinkels, an der die Gurtkräfte eines an dem Haltewinkel befestigten Gurtschlosses (mit einer Kraftkomponente senkrecht zur Schienenlängsrichtung) angreifen können.

Die insbesondere für Anspruch 1 gattungsbildende DE 201 15 164 U1 betrifft eine Schienenlängsführung für einen Kraftfahrzeugsitz mit einem Haltewinkel zur Anbindung eines Gurtschlosses, wobei ein Befestigungsabschnitt des Haltewinkels in einen zugeordneten Schlitz einer Führungsschiene eingreift.

Aus der insbesondere für Anspruch 19 gattungsbildenden DE 199 00 941 A1 ist eine Befestigung eines Haltewinkels für eine Gurtschloss an einer Führungsschiene bekannt. Der Haltewinkel ragt dabei mit einem Teilabschnitt in den vom entsprechenden Schienenpaar umschlossenen Raum.

Bei der Befestigung eines Gurtschlosses an einer Schienenlängsführung für einen Kraftfahrzeugsitz besteht das Problem, dass in einem Crash-Fall auf das Gurtschloss sehr große Kräfte wirken können, wenn ein Fahrzeuginsasse durch einen diesem Gurtschloss zugeordneten Sicherheitsgurt zurückgehalten wird. Diese Kräfte weisen - bezogen auf eine in ein Kraftfahrzeug eingebaute Schienenlängsführung für einen Kraftfahrzeugsitz - eine vertikal nach oben gerichtete Komponente (senkrecht zur Schienenlängsführung) sowie eine nach innen gerichtete Komponente (senkrecht zur Schienenlängsführung und zur Vertikalen) auf, entsprechend den Zugkräften, die auf den mit dem Gurtschloss verbundenen Sicherheitsgurt wirken, wenn dieser einen auf dem entsprechenden Fahrzeugsitz befindlichen Insassen auffängt. Solche Kräfte können bei besonders schweren Unfällen dazu führen, dass sich der Haltewinkel, über den das Gurtschloss an einer Führungsschiene der Schienenlängsführung befestigt ist, von der entsprechenden Schiene löst, wenn die Befestigungsstellen den auftretenden Kräften nicht standhalten.

Die eingangs beschriebene Anordnung, bei der ein Haltewinkel nicht einfach an einer äußeren Oberfläche einer Führungsschiene der Schienenlängsführung befestigt wird, sondern vielmehr durch einen Schlitz in dieser Führungsschiene hindurch mit einem Befestigungsabschnitt in dem von den beiden Schienen der Schienenlängsführung umschlossenen Innenraum angeordnet ist, verhindert ein Ablösen des Haltewinkels von jener Führungsschiene. Denn der Haltewinkel ist ja in einem von den beiden Führungsschienen der Schienenlängsführung umfassten Hohlraum angeordnet und dadurch gegen ein Ablösen von der Schienenlängsführung gesichert. Hierbei muss durch Verwendung entsprechend stabiler Materialien bzw. durch eine entsprechende Wandstärke der verwendeten Materialien sichergestellt werden, dass auch bei sehr großen Crash-Kräften die mit dem Schlitz versehene Führungsschiene der Schienenlängsführung nicht im Bereich des Schlitzes aufreißen kann bzw. ein Aufreißen des Haltewinkels bewirkt. So wird gewährleistet, dass der Befestigungsabschnitt des Haltewinkels des Gurtschlosses sicher zwischen den beiden Führungsschienen aufgenommen ist und sich nicht von der zugeordneten Führungsschiene ablösen kann.

Der Erfindung liegt das Problem zugrunde, eine Schienenlängsführung der eingangs genannten Art weiter zu verbessern, so daß die Gefahr einer crash-bedingten Ablösung des Haltewinkels des Gurtschlosses von der einen Führungsschiene der Schienenlängsführung minimiert wird.

Dieses Problem wird nach einem Aspekt der Erfindung durch die Schaffung einer Schienenlängsführung mit den Merkmalen des Patentanspruchs 1 gelöst.

Danach erstreckt sich der Befestigungsabschnitt des Haltewinkels in Schienenlängsrichtung betrachtet über den Schlitz in der einen Führungsschiene hinaus und die Befestigungsstelle, an der der Befestigungsabschnitt des Haltewinkels mit der einen Führungsschiene verbunden wird, ist in Schienenlängsrichtung betrachtet von dem Schlitz beabstandet.

Die erfindungsgemäße Lösung hat den Vorteil, daß die in einem Crash-Fall auftretenden Gurtkräfte über das Gurtschloß, den Haltewinkel und dessen Befestigungsabschnitt in einen von dem Schlitz beabstandeten Abschnitt der einen Führungsschiene der Schienenlängsführung eingeleitet werden. Hierdurch wird die Belastung der Führungsschiene in der unmittelbaren Umgebung des Schlitzes verringert und die Gefahr, daß die Führungsschiene in Bereich des Schlitzes aufreist minimiert.

Der Witz der Erfindung liegt somit darin, daß die Krafteinleitung von dem Haltewinkel in die zugeordnete Führungsschiene so modifiziert wird, daß die Belastung im Eingriffsbereich des Haltewinkels in den Schlitz der Führungsschiene deutlich reduziert wird, um ein Aufreißen der Führungsschiene im Bereich des Schlitzes zu verhindern.

Bezogen auf den in einem Kraftfahrzeug eingebauten Zustand der Schienenlängsführung, in dem die beiden Führungsschienen in Fahrtrichtung (Vorwärtsrichtung) betrachtet ein vorderes und ein hinteres Ende aufweisen, ist die Befestigungsstelle von dem Schlitz vorzugsweise in Richtung auf das hintere Ende der einen Führungsschiene beabstandet. Hierdurch wird erreicht, daß die Befestigungsstelle in einem Crash-Fall nicht mit Druck- sondern ausschließüch mit Zugkräften beaufschlagt wird. Hierzu erstreckt sich ein Bereich des Befestigungsabschnittes in Schienenlängsrichtung bis zu jener von dem Schlitz beabstandeten Befestigungsstelle.

Weiterhin kann eine zusätzliche Verdrehsicherung vorgesehen sein, die ein Verschwenken des Befestigungsabschnittes und damit des Haltewinkels insgesamt um die Befestigungsstelle verhindern soll. Hierzu kann der Haltewinkel mit der einen Führungsschiene an mindestens einer von der Befestigungsstelle in Schienenlängsrichtung beabstandeten Stelle zusammenwirken.

Gemäß einem Ausführungsbeispiel stützt sich zur Verdrehsicherung ein Anschlag des Haltewinkels an einen Gegenanschlag der einen Führungsschiene ab.Nach einer anderen Ausführungsform ist außerhalb der eigentlichen Befestigungsstelle ein zusätzliches Befestigungsmittel zur Verbindung von Haltewinkel und der einen Führungsschiene vorgesehen, das z. B. zur Herstellung einer formschlüssigen Verbindung oder einer kraftschlüssigen Verbindung (Schraub- oder Nietverbindung) dienen kann.

Die eigentliche Befestigungsstelle, an der der Befestigungsabschnitt des Haltewinkels mit der einen Führungsschiene verbunden ist, kann z. B. durch miteinander fluchtende Befestigungsöffnungen in dem Befestigungsabschnitt des Haltewinkels einerseits und der einen Führungsschiene andererseits gebildet werden, die von einem Befestigungsmittel, z. B. einer Schraube mit einer zugeordneten Mutter oder einem Niet, durchgriffen werden.

Die Befestigungsstelle kann darüber hinaus zur Befestigung einer weiteren Baugruppe, z. B. eines Lagerbockes für eine Sitzhöhenverstellung, an der einen Führungsschiene dienen.

Um ein Aufreißen des Schlitzes unter der Wirkung großer Crash-Kräfte zu vermeiden, kann der Schlitz an einem seitlichen Ende einen Freischnitt aufweisen.

Die beiden Führungsschienen der Sitzlängsführung sind im Querschnitt vorzugsweise jeweils im wesentlichen U-förmig ausgebildet und weisen an ihren seitlichen Schenkeln jeweils Führungs- und Verhakungsbereiche auf, mit denen die beiden Führungsschienen längsverschieblich ineinandergreifen. Hierdurch wird zwischen den beiden Führungsschienen ein Hohlraum eingeschlossen. In diesen Hohlraum ist der Befestigungsabschnitt des Haltewinkels durch den Schlitz in der einen Führungsschiene hindurch geführt. Der Schlitz befindet sich dabei vorzugsweise im Übergangsbereich von dem Quersteg zu dem einen seitlichen Schenkel der entsprechenden U-förmigen Führungsschiene.

Nach einem anderen Aspekt der Erfindung ist gemäß Patentanspruch 14 an der einen Führungsschiene ein Stützelement derart befestigt, dass der Haltewinkel mit dem Stützelement in Eingriff gerät, wenn dessen Halteabschnitt in Richtung der Gurtkraft bewegt wird.

Bei der erfindungsgemäßen Lösung wird die Tatsache ausgenutzt, dass in einem Crash-Fall auftretende, besonders große Gurtkräfte, die zu einem Aufreißen des Schlitzes in der einen Führungsschiene führen könnten, gleichzeitig auch eine Verformung, insbesondere ein Verbiegen, des Haltewinkels bewirken, so dass sich der mit der Kraftangriffsstelle (Befestigungsstelle) für das Gurtschloss versehene Halteabschnitt in Richtung der an der Kraftangriffsstelle angreifenden Gurtkräfte bewegt. Diese durch Deformation hervorgerufene Bewegung von einzelnen Bereichen des Haltewinkels wird genutzt, um diese mit einem an der einen Führungsschiene festgelegten Stützelement in Eingriff zu bringen. Das Stützelement nimmt dann die auf den Haltewinkel wirkenden Kräfte zumindest teilweise auf und verhindert so, dass diese Kräfte über den Haltewinkel überwiegend in den Randbereich des Schlitzes eingeleitet werden, der von dem Befestigungsabschnitt des Haltewinkels durchgriffen wird und der hierdurch aufreißen könnte bzw. ein Aufreißen des Befestigungsabschnittes des Gurthaltewinkels hervorrufen könnte.

Das Stützelement kann hierbei in einfacher Weise durch eine Baugruppe gebildet werden, die für einen anderen Zweck ohnehin an der einen, längsverschieblichen Schiene der Schienenlängsführung befestigt ist, z. B. durch einen zur Lagerung eines Kraftfahrzeugsitzes an der einen Führungsschiene vorgesehenen Lagerbock.

Der Haltewinkel ist üblicherweise derart ausgestaltet, dass er neben dem Befestigungsabschnitt, über den er an der einen Führungsschiene befestigt ist, einen hiervon abgewinkelten Halteabschnitt aufweist, der sich im Wesentlichen senkrecht zur Schienenlängsrichtung (nach oben) erstreckt und eine Befestigungsstelle für ein Gurtschloss aufweist, welche zugleich den Kraftangriffspunkt für die Gurtkräfte bildet.

Die im Crash-Fall auftretenden Gurtkräfte, die in der Regel eine nach oben gerichtete erste Kraftkomponente senkrecht zur Schienenlängsrichtung sowie eine nach innen gerichtete zweite Kraftkomponente senkrecht zur Schienenlängsrichtung aufweisen, bewirken dementsprechend eine Art Schwenkbewegung des Gurthaltewinkels nach innen (bezogen auf den in ein Kraftfahrzeug eingebauten Zustand der entsprechenden Sitzlängsführung), wobei die Schwenkbewegung durch ein Verbiegen des Gurthaltewinkels, insbesondere im Übergangsbereich vom Halteabschnitt zum Befestigungsabschnitt, ermöglicht wird.

Das auf einer Oberfläche der einen Führungsschiene angeordnete Stützelement ragt bevorzugt in Richtung auf den Halteabschnitt des Haltewinkels über den seitlichen Rand der entsprechenden Oberfläche hinaus, so dass der Haltewinkel bei einer Crash-bedingten Verformung mit dem seitlich überstehenden Bereich des Stützelementes in Eingriff treten kann. Als Anlage für den Haltewinkel dient dabei vorzugsweise ein abgerundeter Bereich des Stützelementes. Hierdurch soll vermieden werden, dass der Halteabschnitt des Haltewinkels mit einem scharfkantigen Bereich des Stützelementes in Eingriff tritt, was eine erhöhte Gefahr des Aufreißens des Haltewinkels in seinem Halteabschnitt zur Folge hätte.

Bei der den Haltewinkel aufnehmenden Schiene der Schienenlängsführung handelt es sich vorzugsweise um die Oberschiene, von der der Haltewinkel mit seinem Halteabschnitt nach oben absteht.

Zur Befestigung des Stützelementes an der einen Führungsschiene dient in einer vorteilhaften Ausführungsform mindestens eine (durch Laserschweißen erzeugte) Schweißnaht, die sich zumindest entlang derjenigen Längsseite des Stützelementes erstreckt, die dem Halteabschnitt des Haltewinkels zugewandt ist. Hierdurch wird eine besondere Stabilität gegenüber Kräften erreicht, die bei Verformung des Haltewinkels auf die dem Haltewinkel zugewandte Seite des Stützelementes ausgeübt werden.

Zur Befestigung des Haltewinkels an der einen Führungsschiene über seinen Befestigungsabschnitt dient mindestens ein Befestigungselement, das den Befestigungsabschnitt des Haltewinkels, die Führungsschiene sowie das Stützelement durchgreift. Vorzugsweise handelt es sich bei dem Befestigungselement um eine Befestigungsschraube, die in ein Innengewinde des Stützelementes geschraubt ist und deren Kopf in dem von den Führungsschienen umschlossenen Raum angeordnet ist. Hierdurch wird der für die Befestigungsmittel zur Befestigung des Haltewinkels an der einen Führungsschiene erforderliche Bauraum minimiert.

In einer bevorzugten Weiterbildung der Erfindung ist der Haltewinkel mit seinem Befestigungsabschnitt in einem Schlitz in Form eines ersten Freischnittes der einen Führungsschiene hineingesteckt und ragt mit seinem dem Halteabschnitt abgewandten Ende durch einen zweiten Freischnitt der Führungsschiene, der dem ersten Freischnitt senkrecht zur Erstreckungsrichtung der Führungsschiene gegenüberliegend angeordnet ist und der in Erstreckungsrichtung der Führungsschiene eine geringere Ausdehnung aufweist als der erste Freischnitt. Die Länge des zweiten Freischnittes (Ausdehnung in Schienenlängsrichtung) ist dabei so gewählt, dass das vordere, freie Ende des Befestigungsabschnittes des Gurthaltewinkels von dem zweiten Freischnitt im Wesentlichen passgenau aufgenommen ist. D. h., die Ausdehnung des zweiten Freischnittes entlang der Schienenlängsrichtung entspricht der Ausdehnung des von ihm aufgenommenen freien Endes des Befestigungsabschnittes in dieser Richtung.

Hierdurch wird ein Verdrehen des Gurthaltewinkels verhindert, das zu einer erheblichen Belastung des ersten Freischnittes der einen Führungsschiene führen könnte.

Ferner weist der Befestigungsabschnitt des Gurthaltewinkels im Bereich seines freien, von dem Halteabschnitt abgewandten Endes mindestens einen Anschlag auf, mit dem er an dem Rand des zweiten Freischnittes der einen Führungsschiene anliegt, wodurch die Einstecktiefe des Befestigungsabschnittes festgelegt wird.

Weitere Merkmale und Vorteile der Erfindung werden bei der nachfolgenden Beschreibung von Airsführungsbeispielen der Erfindung anhand der Figuren deutlich werden. Es zeigen:
- Figur 1a: eine perspektivische Darstellung einer Schieneniängsfuhrung mit einem daran über einen Haltewinkel befestigten Gurtschloß;
- Figur 1b: eine Rückansicht der Schienenlängsführung aus Figur 1a im Bereich des Haltewinkels des Gurtschlosses;
- Figur 1c: eine Unteransicht der einen Schiene der Schienenlängsführung aus Figur 1a im Bereich des Haltewinkels des Gurtschlosses;
- Figur 2: eine Rückansicht gemäß Figur 1b, jedoch ohne Haltewinkel;
- Figur 3: eine perspektivische Darstellung des Gurtschlosses aus Figur 1a mit dem zugeordneten Haltewinkel;
- Fig. 4: einen Querschnitt durch eine weitere Schlenenlängsführung mit einem an einer Führungsschiene angeordneten Haltewinkel für ein Gurtschloss;
- Fig. 5a: eine perspektivische Darstellung des Haltewinkeis aus Figur 4 mit einem daran befestigten Gurtschloss;
- Fig. 5b: eine perspektivische Draufsicht auf diejenige Führungsschiene der Schienenlängsführung, an der der Haltewinkel mit Gurtschloss anzuordnen ist;
- Fig. 6: eine perspektivische Unteransicht der einen Führungsschiene der Schienenlängsführung mit dem daran angeordneten Haltewinkel für ein Gurtschloss;
- Fig. 7a und 7b: zwei unterschiedliche perspektivische Darstellungen der einen Schiene der Schienenlängsführung mit dem daran angeordneten Gurtschloss und einem auf der Schiene angeordneten Lagerbock;
- Fig. 8: eine weitere perspektivische Darstellung der Anordnung aus den Figuren 7a und 7b zusammen mit der zweiten Schiene der Schienenlängsführung.

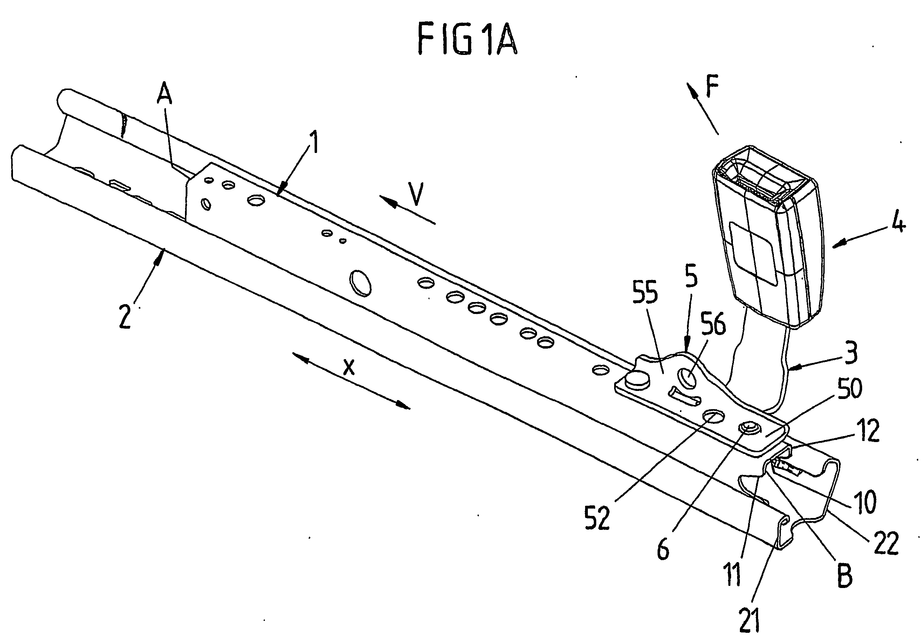

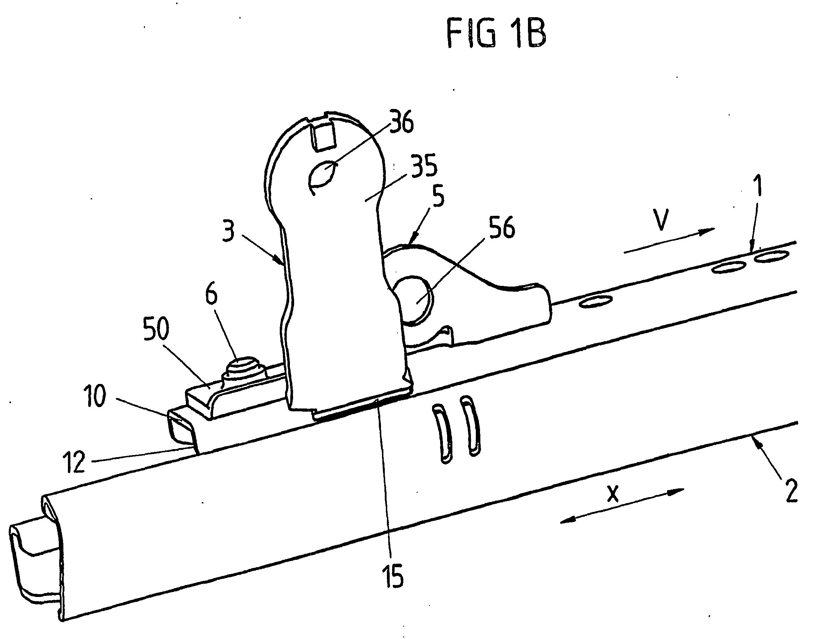

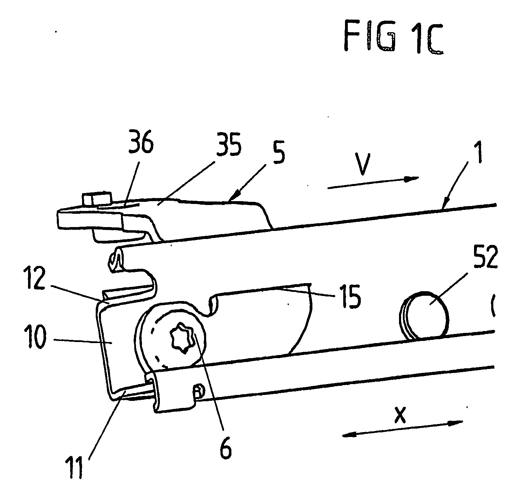

In den Figuren 1a bis 3 ist eine Schienenlängsführung für einen Kraftfahrzeugsitz dargestellt, die aus einer im Querschnitt im wesentlichen U-förmigen Oberschiene 1 und einer ebenfalls im wesentlichen U-förmigen Unterschiene 2 besteht. Die beiden Führungsschienen 1, 2 weisen an ihren seitlichen Schenkeln 11, 12 bzw. 21, 22 jeweils Führungs- und Verhakungsbereiche auf, entlang derer die beiden Führungsschienen 1, 2 längsverschieblich miteinander in Eingriff stehen. Dabei bilden die Führungsschienen 1, 2 mit ihren Basisbereichen 10 bzw. 20 sowie ihren seitlichen Schenkeln 11, 12 bzw. 21, 22 einen längserstreckten Hohlraum, der von den Führungsschienen 1, 2 umschlossen ist.

Die eine Führungsschiene 1 dient als Oberschiene (sitzseitige Schiene) zur Aufnahme des Sitzuntergestells eines Kraftfahrzeugsitzes und ist längsverschieblich in der anderen, als Unterschiene ausgebildeten und karosseriefest anzuordnenden Führungsschiene 2 gelagert. Üblicherweise ist an beiden Längsseiten eines Kraftfahrzeugsitzes jeweils eine Schienenführung 1, 2 der in Figur 1a dargestellten Art angeordnet.

Die Verbindung des Sitzuntergestells eines Kraftfahrzeugsitzes mit der einen Führungsschiene 1 (sitzseitige Schiene) der Schienenlängsführung 1, 2 erfolgt in der Regel über eine Gelenkhebelanordnung, mittels der das Untergestell bezüglich der Schienenlängsführung 1, 2 in der Höhe eingestellt werden kann (Einstellung der Sitzhöhe). Zur Anbindung einer derartigen Hebelanordnung an die sitzseitige Schiene 1 der Schienenlängsführung ist gemäß Figur 1a ein Lagerbock 5 vorgesehen, der mit einer Basisfläche 50 auf der sitzseitigen Schiene aufliegt und an dieser befestigt ist und der einen von der Basisfläche 52 winklig, insbesondere im wesentlichen senkrecht, abstehenden Lagerabschnitt 55 mit einer Lagerbohrung 56 für einen Verstellhebel aufweist.

Bezogen auf die Fahrtrichtung bzw. Vorwärtsrichtung V der sich in Fahrzeuglängsrichtung x erstreckenden Schienenlängsführung 1, 2 ist der Lagerbock 5 im Bereich des hinteren Endes der sitzseitigen Führungsschiene 1 angeordnet. Dort ist ferner ein Haltewinkel 3 befestigt, der ein Gurtschloß 4 einer Sicherheitsgurtanordnung trägt. Im folgenden soll nun anhand der Figuren 1a bis 3 die Befestigung des Haltewinkels 3 an der sitzseitigen Schiene 1 der Schienenlängsführung 1, 2 genauer beschrieben werden.

Der Haltewinkel 3 weist einen Befestigungsabschnitt 30 zur Befestigung des Haltewinkels 3 an der sitzseitigen Schiene 1 und einen hiervon winklig, insbesondere im wesentlichen senkrecht, abstehenden Halteabschnitt 35 mit einer Befestigungsöffnung 36 für das Gurtschloß 4 auf. Auf dieses können in einem Crash-Fall sehr große Kräfte F wirken, wenn ein Fahrzeuginsasse durch den entsprechenden Sicherheitsgurt aufgefangen wird. Diese Kräfte sind winklig zur Fahrzeuglängsachse x schräg nach vorne oben gerichtet und werden von dem Gurtschloß 4 über den Haltewinkel 3 in die sitzseitige Schiene 1 der Schienenlängsführung 1, 2 eingeleitet. Es ist daher von Bedeutung, den Haltewinkel 3 derart an der sitzseitigen Schiene 1 zu befestigen, daß er auch unter der Wirkung sehr großer Kräfte sich nicht von dieser löst.

Zu diesem Zweck ist vorliegend der Befestigungsabschnitt 30 des Haltewinkels 3 durch einen Schlitz 15 geführt, der sich im Bereich des hinteren Endes der sitzseitigen Schiene 1 in Fahrzeuglängsrichtung x erstreckt, und zwar im Übergangsbereich von der Basisfläche 10 zu dem einen abgewinkelten Schenkel 12 der sitzseitigen Schiene 1. Der Befestigungsabschnitt 30 des Haltewinkels 3 liegt dadurch nicht einfach auf der sitzseitigen Schiene auf, wie der Lagerbock 5, sondern ist vielmehr in dem durch die beiden Führungsschienen 1, 2 gebildeten Hohlraum unterhalb der Basisfläche 10 der sitzseitigen Schiene 1 angeordnet. Durch die in einem Crash-Fall wirkenden Gurtkräfte F wird demnach der Befestigungsabschnitt 30 des Haltewinkels 3 von unten gegen die Basisfläche 10 der sitzseitigen Schiene 1 gedrückt, so daß eine großflächige Krafteinleitung von dem Befestigungsabschnitt 30 des Haltewinkels 3 in die Basisfläche 10 der sitzseitigen Schiene 1 erfolgt. Im Unterschied zu solchen Anordnungen, bei denen der Haltewinkel 3 mit seinem Befestigungsabschnitt 30 auf der Basisfläche 10 der sitzseitigen Führungsschiene 1 aufliegt und die Krafteinleitung in die sitzseitige Schiene 1 lediglich über die entsprechenden Befestigungsmittel erfolgt, besteht vorliegend ein deutlich geringeres Risiko, daß sich der Haltewinkel 3 von der sitzseitigen Schiene 1 löst.

Die Gefahr eines Abreißens des Haltewinkels 3 von der sitzseitigen Schiene 1 bestünde lediglich dann, wenn die sitzseitige Schiene 1 aufgrund der über den Haltewinkel 3 eingeleiteten Kräfte im Bereich des zur Einführung des Befestigungsabschnittes 30 des Haltewinkels 3 dienenden Schlitzes 15 aufreist. Um dies zu verhindern, weist der Befestigungsabschnitt 30 des Haltewinkels 3 einen Fortsatz 31 auf, der sich in Fahrzeuglängsrichtung x in eine Richtung auf das hintere Ende B der sitzseitigen Schiene 1 (also entgegen der Fahrt- bzw. Vorwärtsrichtung V) erstreckt. An diesem Fortsatz 31 des Befestigungsabschnittes 3 ist eine Befestigungsöffnung 32 vorgesehen, über die der Haltewinkel 31 an der sitzseitigen Schiene 1 zu befestigen ist, wozu diese eine korrespondierende Befestigungsöffnung 13 im Bereich ihres hinteren Endes B aufweist.

Die beiden Befestigungsöffnungen 13, 32 bilden demnach eine Befestigungsstelle, die der Befestigung des Haltewinkels 3 über den Fortsatz 31 seines Befestigungsabschnittes 30 an der Basisfläche 10 der sitzseitigen Schiene 1 dient. Den Befestigungsöffnungen 13, 32 ist hierzu ein Befestigungsmittel 6 in Form einer Befestigungsschraube mit einer zugehörigen Mutter zugeordnet. Alternativ können auch andere Befestigungsmittel, wie z. B. ein Befestigungsniet, verwendet werden.

Anhand der Figuren 1a bis 3 ist deutlich erkennbar, daß die durch die Befestigungsöffnungen 13, 32 gebildete Befestigungsstelle in Fahrzeuglängsrichtung x (Schienenlängsrichtung) betrachtet von dem Schlitz 15 beabstandet angeordnet ist, und zwar in einer Richtung entgegen der Fahrt- bzw. Vorwärtsrichtung V. Mit anderen Worten ausgedrückt befindet sich die Befestigungsstelle 13, 32 vom vorderen Ende A der sitzseitigen Schiene 1 her betrachtet hinter dem Schlitz 15 und vom hinteren Ende B der sitzseitigen Schiene 1 her betrachtet vor dem Schlitz 15.

Durch die vorbeschriebene Ausbildung des Befestigungsabschnitts 30 des Haltewinkels 3 und die Anordnung der Befestigungsstelle 13, 32 in Schienenlängsrichtung x von dem Schlitz 15 beabstandet wird erreicht, daß in einem Crash-Fall auftretende Gurtkräfte F nicht nur in den Bereich der sitzseitigen Führungsschiene 1 eingeleitet werden, in dem sich der Schlitz 15 in Fahrzeuglängsrichtung x erstreckt, sondern insbesondere auch in einen dahinter liegenden Bereich der sitzseitigen Führungsschiene 1, der verglichen mit dem Schlitz 15 näher am hinteren Ende B der Führungsschiene 1 liegt. Hierdurch wird die Gefahr des Aufreißens des Schlitzes 15 unter der Wirkung der in die sitzseitige Schiene 1 eingeleiteten Gurtkräfte F erheblich reduziert.

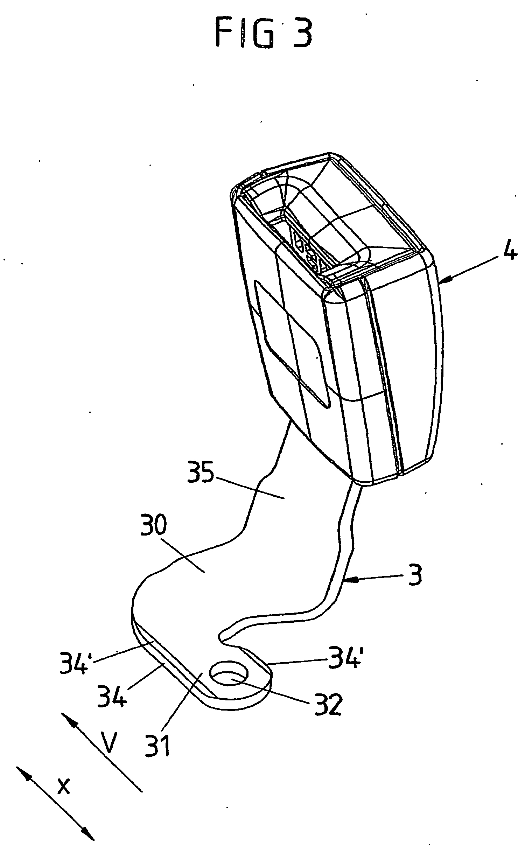

Gemäß Figur 3 erstreckt sich an zwei einander gegenüberliegenden, in Fahrzeuglängsrichtung x verlaufenden seitlichen Rändern des Befestigungsabschnittes 30 und insbesondere von dessen Fortsatz 31 jeweils eine abgeschrägte Kante 34 (mit Abschrägung 34'), die sich im eingebauten Zustand des Haltewinkels 3 an jeweils einer Innenfläche der sitzseitigen Schiene 1 abstützt, nämlich an jeweils einer Innefläche, die im Übergangsbereich der Basisfläche 10 zu den beiden abgewinkelten Schenkeln 11, 12 liegt. Die Kanten 34 des Befestigungsabschnittes 30 wirken also als Anschläge, die sich an entsprechenden inneren Gegenanschlägen der sitzseitigen Schiene 1 abstützen und die dadurch einem Verdrehen des Haltewinkels 3 unter der Wirkung der in einem Crash-Fall auftretenden Kräfte entgegenwirken.

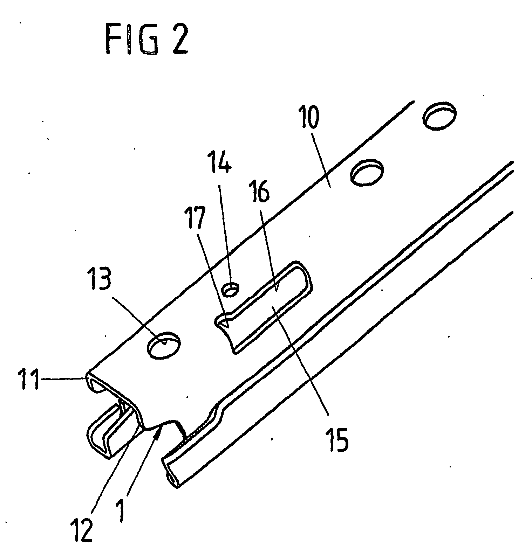

Zusätzlich könnte eine weitere Befestigungsstelle vorgesehen sein, über die der Befestigungsabschnitt 30 des Haltewinkels 3 an der sitzseitigen Schiene 1 befestigt ist und die in Fahrzeuglängsrichtung von der oben beschriebenen ersten Befestigungsstelle 13, 32 beabstandet ist, vgl. hierzu die in Figur 2 dargestellte, neben dem Schlitz 15 in der Basisfläche 10 der sitzseitigen Führungsschiene 1 vorgesehene weitere Befestigungsstelle 14. Auch hierdurch kann ein Verdrehen des Haltewinkels 3 um seine erste Befestigungsstelle 13, 32 verhindert werden.

In Figur 2 ist ferner erkennbar, daß der Schlitz 15 an einer Stirnseite einen Freischnitt 17 aufweist, um Kerbwirkungen zu minimieren und ein Einreißen der sitzseitigen Führungsschiene 1 im Bereich des Schlitzes 15 zu verhindern.

Schließlich ist anhand Figur 1a erkennbar, daß dieselben Befestigungsmittel, insbesondere die oben erwähnte Befestigungsschraube 6, die zur Befestigung des Haltewinkels 3 an der sitzseitigen Führungsschiene 1 dienen, zugleich auch zur Befestigung des Lagerbockes 5 an der Führungsschiene 1 verwendet werden können. In Figur 1a ist außerdem eine zur Befestigung nicht verwendete mittlere Befestigungsöffnung 52 des Lagerbockes 5 erkennbar, die mit der in Figur 2 gezeigten zusätzlichen Befestigungsöffnung 14 in der sitzseitigen Führungsschiene 1 fluchtet, welche zur Bildung einer Befestigungsstelle für eine zusätzliche Verdrehsicherung dienen kann.

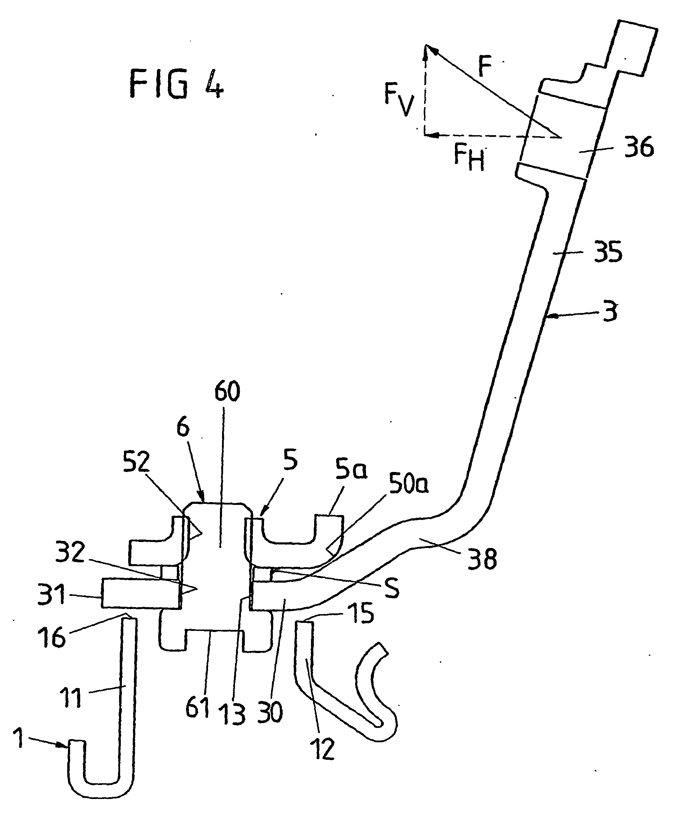

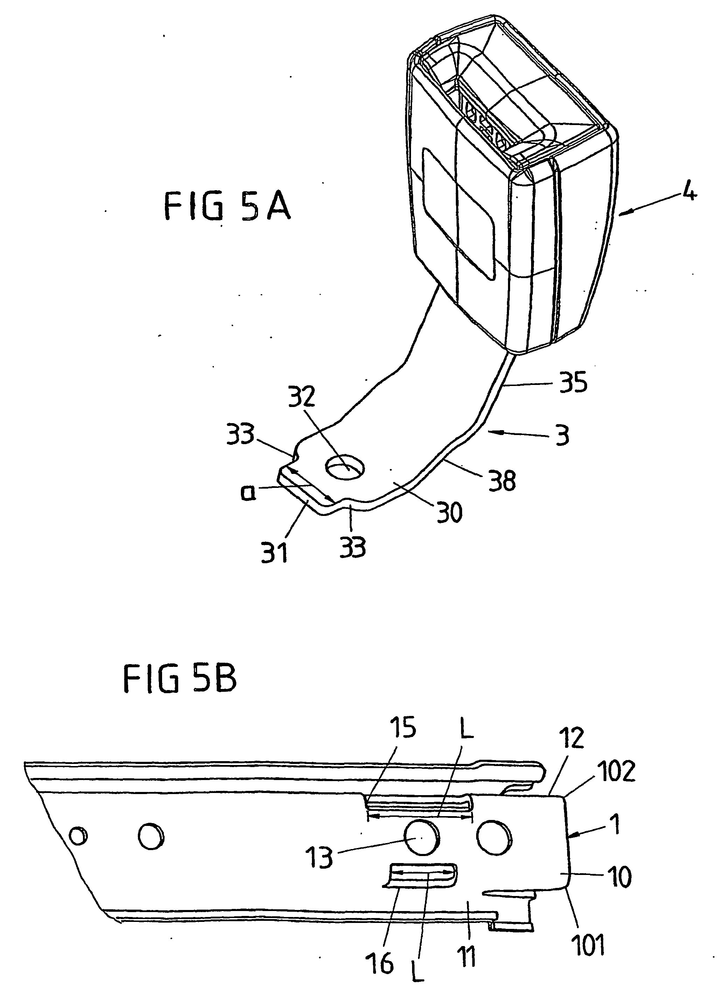

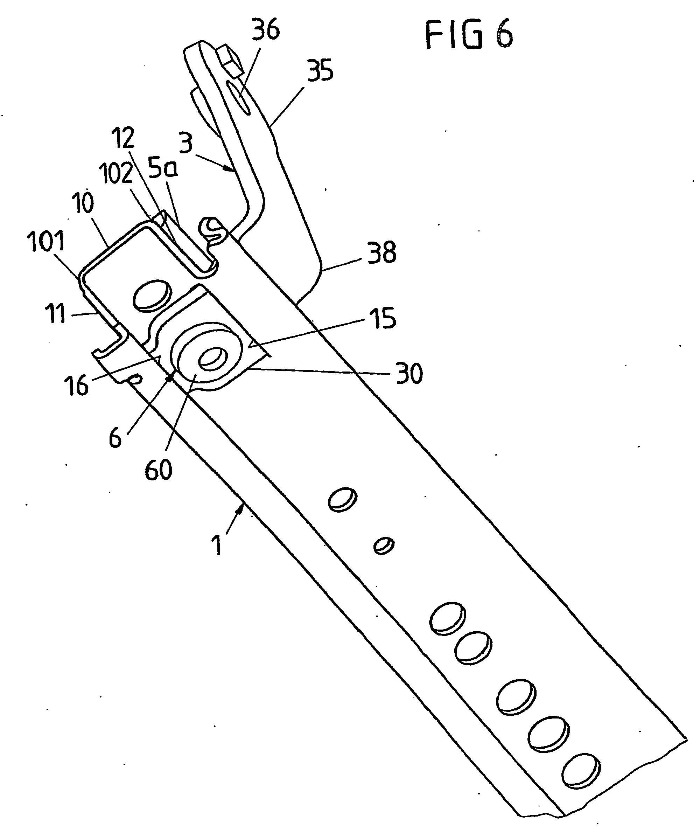

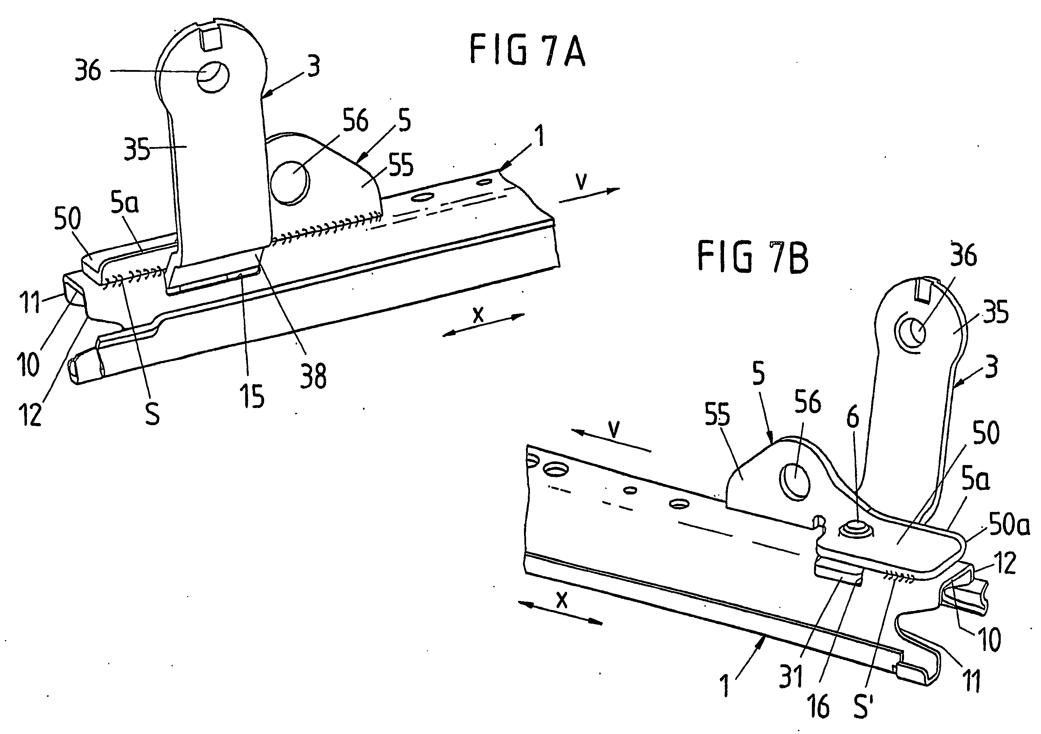

In den Figuren 4 bis 8 ist eine Schienenlängsführung für einen Kraftfahrzeugsitz dargestellt, die aus einer im Querschnitt im Wesentlichen U-förmigen ersten Führungsschiene 1 in Form einer Oberschiene und einer ebenfalls im Wesentlichen U-förmigen zweiten Führungsschiene 2 in Form einer Unterschiene besteht.

Im Folgenden wird anhand der Figuren 4 bis 8 die Befestigung des Haltewinkels 3 an der sitzseitigen Schiene 1 der Schienenlängsführung 1, 2 genauer beschrieben werden.

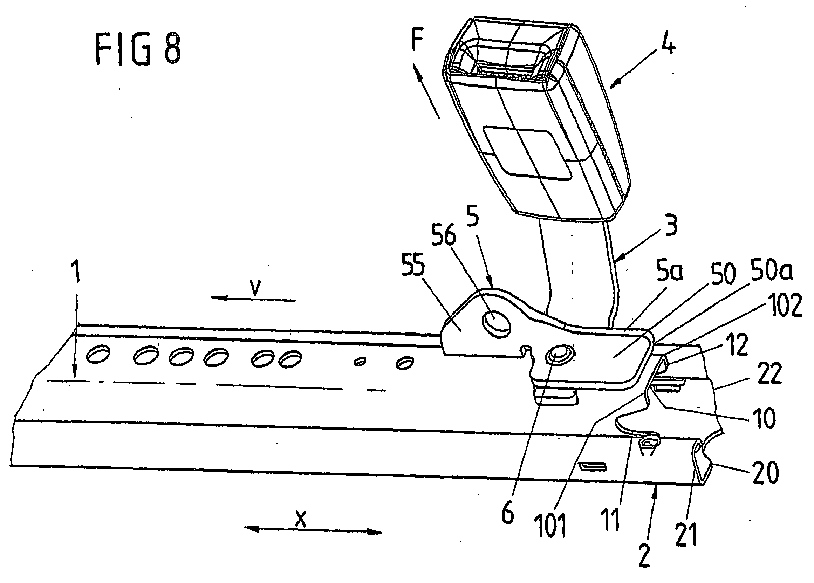

Der Haltewinkel 3 weist einen Befestigungsabschnitt 30 zur Befestigung des Haltewinkels 3 an der sitzseitigen Schiene 1 und einen hiervon winklig, insbesondere im Wesentlichen senkrecht, abstehenden Halteabschnitt 35 mit einer Befestigungsöffnung 36 für das Gurtschloss 4 auf. Auf dieses können in einem Crash-Fall sehr große Kräfte F wirken, wenn ein Fahrzeuginsasse durch den entsprechenden Sicherheitsgurt aufgefangen wird. Diese Kräfte weisen - bezogen auf den in ein Kraftfahrzeug eingebauten Zustand der Schienenlängsführung 1, 2 - eine senkrecht zur Schienenlängsrichtung x nach oben verlaufende Komponente F_{V} (vertikale Komponente) sowie eine senkrecht zur Schienenlängsführung nach innen gerichtete Komponente F_{H} (horizontale Komponente) auf, vergleiche insbesondere Figur 4. Darüber hinaus gibt es auch eine Komponente entlang der Schienenlängsrichtung x, vergleiche insbesondere Figur 8. Diese Kräfte werden von dem Gurtschloss 4 über den Haltewinkel 3 in die sitzseitige Schiene 1 der Schienenlängsführung 1, 2 eingeleitet. Es ist daher von Bedeutung, den Haltewinkel derart an der sitzseitigen Schiene 1 anzuordnen und zu befestigen, dass er sich auch unter der Wirkung sehr großer Kräfte nicht von dieser löst. Denn bei einem Ablösen des Haltewinkels 3 von der zugeordneten sitzseitigen Schiene 1 verlöre der Sicherheitsgurt seine Funktion, den entsprechenden Fahrzeuginsassen zurückzuhalten (Rückhaltewirkung).

Zur Befestigung des Haltewinkels 3 an der sitzseitigen Schiene 1 ist der Befestigungsabschnitt 30 des Haltewinkels 3 durch einen Schlitz 15 geführt, der sich im Bereich des hinteren Endes der sitzseitigen Schiene 1 mit einer definierten Länge L in Fahrzeuglängsrichtung x erstreckt, und zwar im Übergangsbereich von der sich zwischen zwei seitlichen Rändern 101, 102 erstreckenden Basisfläche 10 zu dem einen abgewinkelten Schenkel 12 der sitzseitigen Schiene 1. Der in dem von den beiden Führungsschienen 1, 2 umschlossenen Hohlraum angeordnete Befestigungsabschnitt 30 des Haltewinkels 3 weist eine Befestigungsöffnung 32 auf, die mit einer zugeordneten

Befestigungsöffnung 13 der sitzseitigen Schiene 1 und einem mit einem Innengewinde versehenen Durchzug 52 an der Basisfläche 50 des Lagerbockes 5 fluchtet. Die beiden Öffnungen 32, 13 sowie der Durchzug 52 werden durchgriffen von einer Befestigungsschraube 6, deren mit einem Außengewinde versehener Schaft 60 in das Innengewinde des Durchzugs 52 des Lagerbockes 5 eingeschraubt ist. Hierdurch sind der Haltewinkel 3 und der Lagerbock 5 an einer Befestigungsstelle mit der Basisfläche 10 der sitzseitigen Schiene 1 verbunden, wobei der Befestigungsabschnitt 30 des Haltewinkels 3 auf einer Seite (der Unterseite) und die Basisfläche 50 des Lagerbockes 5 auf der anderen Seite (der Oberseite) der Basisfläche 10 der sitzseitigen Schiene 1 angeordnet ist. Der Kopf 61 der Befestigungsschraube 6 befindet sich innerhalb des von den Führungsschienen 1, 2 umschlossenen Hohlraumes, so dass die Bauteilverbindung insgesamt mit minimalem Raumbedarf realisiert ist.

Im Ergebnis liegt der Befestigungsabschnitt 30 des Haltewinkels 3 nicht einfach auf der sitzseitigen Schiene 1 auf, wie der Lagerbock 5, sondern ist vielmehr in dem durch die beiden Führungsschienen 1, 2 gebildeten Hohlraum unterhalb der Basisfläche 10 der sitzseitigen Schiene 1 angeordnet. Durch die in einem Crash-Fall wirkenden Gurtkräfte F wird demnach der Befestigungsabschnitt 30 des Haltewinkels 3 von unten gegen die Basisfläche 10 der sitzseitigen Schiene 1 gedrückt, so dass eine großflächige Krafteinleitung von dem Befestigungsabschnitt 30 des Haltewinkels 3 in die Basisfläche 10 der sitzseitigen Schiene 1 erfolgen kann. Im Unterschied zu solchen Anordnungen, bei denen der Haltewinkel 3 mit seinem Befestigungsabschnitt 30 auf der Basisfläche 10 der sitzseitigen Führungsschiene 1 aufliegt und die Krafteinleitung in die sitzseitige Schiene 1 lediglich über die entsprechenden Befestigungsmittel erfolgt, besteht durch die Anordnung des Befestigungsabschnittes 30 des Haltewinkels 3 in dem von den Führungsschienen 1, 2 umschlossenen Hohlraum bereits ein deutlich geringeres Risiko, dass sich der Haltewinkel 3 von der sitzseitigen Führungsschiene 1 lösen könnte.

Die Gefahr eines Abreißens des Haltewinkels 3 von der sitzseitigen Schiene 1 bestünde lediglich dann, wenn die sitzseitige Schiene 1 aufgrund der über den Haltewinkel 3 eingeleiteten Kräfte im Bereich des zur Einführung des Befestigungsabschnittes 30 des Haltewinkels 3 dienenden Schlitzes 15 aufreist bzw, wenn der Befestigungsabschnitt 30 des Haltewinkels 3 durch das Zusammenwirken mit dem Rand des Schlitzes 15 der sitzseitigen Schiene aufreist.

Um dies zu verhindern, ist einerseits der Befestigungsabschnitt 30 des Haltewinkels 3 mit seinem dem Halteabschnitt 35 abgewandten, vorderen Ende 31 in einen weiteren Schlitz 16 der sitzseitigen Schiene 1 geführt. Dieser weitere Schlitz 16 liegt quer zur Schienenlängsrichtung x gegenüber dem ersten Schlitz 15 am Übergang der Basisfläche 10 der sitzseitigen Schiene 1 zum anderen seitlichen Schenkel 11. Der weitere Schlitz 16 weist in Schienenlängsrichtung x eine kleinere Ausdehnung I (Länge) auf als der gegenüber liegende, erste Schlitz 15. Die Länge I des weiteren Schlitzes 16 in Schienenlängsrichtung x ist so gewählt, dass sie der Ausdehnung a des vorderen, freien Endes des Halteabschnittes 30 in dieser Richtung entspricht. Das mittels zweier Schultern 33 von dem Halteabschnitt 30 abgesetzte vordere freie Ende 31 sitzt somit (in Schienenlängsrichtung x betrachtet) im Wesentlichen passgenau in dem weiteren Schlitz 16. Hierdurch wird ein Verdrehen des Befestigungsabschnittes 30 in dem ersten Schlitz 15 aufgrund der vorwärts gerichteten Komponente der Gurtkraft F verhindert, die zu einem Einreißen des ersten Schlitzes 15 bzw. des Befestigungsabschnittes 30 des Haltewinkels 3 führen könnte. Die an den Schultern des Befestigungsabschnittes 30 des Haltewinkels 3 im Übergang zu dessen freien Ende 31 gebildeten Anschläge 33 begrenzen dabei die Einstecktiefe des Befestigungsabschnittes 30 des Haltewinkels 3 in die beiden Schlitze 15, 16, indem die Schultern 33 an dem Rand des weiteren Schlitzes 15 anliegen.

Darüber hinaus bildet der Lagerbock 5 an einem seitlich über einen (dem Halteabschnitt 35 des Haltewinkels 3 zugewandten) Rand 102 der Basisfläche 10 der sitzseitigen Schiene 1 überstehenden Bereich ein Stützelement 5a, mit dem der Haltewinkel 3 bei einer Crash-bedingten Verformung in Eingriff treten kann. Genauer dient hierzu ein abgerundeter Abschnitt 50a des Stützelementes 5a, der sich neben dem einen seitlichen Schenkel 12 der sitzseitigen Schiene 1 (auf der dem Halteabschnitt 35 des Haltewinkels 3 zugewandten Seite der sitzseitigen Schiene 1) erstreckt. Wirken in Folge eines Crashs auf den Halteabschnitt 35 des Haltewinkels 3 Gurtkräfte F, die eine Vertikalkomponente F_{V} und eine Horizontalkomponente F_{H} aufweisen, so wird der Haltewinkel 3 hierdurch derart verformt, dass er sich in Richtung der Gurtkräfte F verbiegt. Dies entspricht im Wesentlichen einer Schwenkbewegung des Halteabschnittes 35 des Haltewinkels 3 durch Verformung des Übergangsbereiches 38 zwischen Halteabschnitt 35 und Befestigungsabschnitt 30 des Haltewinkels 3 um eine entlang der Schienenlängsrichtung x verlaufende Achse. Bei dieser Bewegung gerät der Übergangsabschnitt 38 zwischen Befestigungsabschnitt 30 und Halteabschnitt 35 des Haltewinkels 3 in Kontakt mit dem abgerundeten Bereich 50a des am Lagerbock 5 vorgesehenen Stützelementes 5a. Hierdurch wird verhindert, dass die Horizontal- und Vertikalkomponente F_{H} und F_{V} der Gurtkraft F zu einer Krafteinleitung von dem Haltewinkel 3 in die sitzseitige Schiene 1 über den Befestigungsabschnitt 30 und den Rand des zugeordneten Schlitzes 15 der sitzseitigen Schiene 1 führen. Denn dies könnte ein Aufreißen des Schlitzes 15 oder des Befestigungsabschnittes 30 zur Folge haben. Aufgrund der in den Figuren 4 bis 8 dargestellten Anordnung werden die entsprechenden Kräfte vielmehr zu einem erheblichen Teil von dem Haltewinkel 3, insbesondere dessen Übergangsabschnitt 38, in das Stützelement 5a des Lagerbockes 5 eingeleitet. Von dort aus werden sie dann weiter in die sitzseitige Schiene 1 abgeleitet.

Um zu verhindern, dass aufgrund besonders starker Crash-Kräfte der Lagerbock 5, und damit das Stützelement 5a, von der sitzseitigen Schiene 1 abgelöst werden könnte, ist der Lagerbock 5 zusätzlich über Schweißnähte S, S' mittels Laserschweißens mit der Basisfläche 10 der sitzseitigen Schiene 1 verbunden. Dabei erstreckt sich die eine Schweißnaht S insbesondere entlang der gesamten dem Halteabschnitt 35 des Haltewinkels 3 zugewandten Längsseite des Lagerbockes 5. Eine zusätzliche Schweißnaht S' ist auf der anderen Längsseite des Lagerbockes 5 vorgesehen.

Im Ergebnis wird also ein Einreißen des ersten Schlitzes 15 durch Zusammenwirken mit dem Befestigungsabschnitt 30 des Haltewinkels 3 zum einen - hinsichtlich der in Schienenlängsrichtung x wirkenden Komponente der Gurtkräfte F - dadurch verhindert, dass der Befestigungsabschnitt 30 mit seinem vorderen Ende 31 (in Schienenlängsrichtung x betrachtet) passgenau in einem weiteren Schlitz 16 der sitzseitigen Schiene 1 aufgenommen ist. Hinsichtlich der senkrecht zur Schienenlängsrichtung x gerichteten Kraftkomponenten F_{H}, F_{V} der Gurtkraft F wird ein Aufreißen des Schlitzes 15 bzw. des hiermit zusammenwirkenden Befestigungsabschnittes 30 des Haltewinkels 3 dadurch vermieden, dass ein Abschnitt 38 des Haltewinkels 3 unter der Wirkung der besagten Kraftkomponenten (sich verbiegend) mit einem abgerundeten Bereich 50a eines an der sitzseitigen Schiene 1 befestigten, und dort seitlich überstehenden Stützelementes 5a in Eingriff tritt, so dass die Kräfte überwiegend in dieses Stützelement 5a bzw. den einstückig mit dem Stützelement 5a ausgebildeten Lagerbock 5 eingeleitet werden und von dort in die sitzseitige Schiene 1 gelangen.

## Patentansprüche

1. Schienenlängsführung für einen Kraftfahrzeugsitz mit
- zwei längserstreckten, ineinandergreifenden Führungsschienen (1, 2), von denen die eine entlang der anderen in Schienenlängsrichtung (x) verschiebbar ist,
- einem Haltewinkel (3) für ein Gurtschloss (4), der an der einen, verschiebbaren Führungsschiene (1) festgelegt ist,
- einem in der einen Führungsschiene (1) vorgesehenen Schlitz (15), durch den ein Befestigungsabschnitt (30, 31) des Haltewinkels (3) in einen von den beiden Führungsschienen (1, 2) umschlossenen Raum geführt ist,
- mindestens einer Befestigungsstelle (13, 32), an der der Befestigungsabschnitt (30, 31) des Haltewinkels (3) durch Befestigungsmittel mit der einen Führungsschiene (1) verbunden ist, und
- einer Kraftangriffsstelle an einem Halteabschnitt (35) des Haltewinkels (3), an der die Gurtkräfte eines an dem Haltewinkel (3) befestigbaren Gurtschlosses (4) angreifen können,
**dadurch gekennzeichnet,**
**dass** die Befestigungsstelle (13, 32) in Schienenlängsrichtung (x) betrachtet von dem Schlitz (15) beabstandet ist und dass sich der Befestigungsabschnitt (30, 31) in Schienenlängsrichtung (x) betrachtet über den Schlitz (15) hinaus bis zu der Befestigungsstelle (13, 32) erstreckt, um die Belastung im Eingriffsbereich des Haltewinkels (3) in den Schlitz (15) der Führungsschiene (1) zu reduzieren, wenn die Gurtkräfte an dem Halteabschnitt (35) angreifen.

2. Schienenlängsführung nach Anspruch 1, **dadurch gekennzeichnet, daß** die eine Führungsschiene (1) bezüglich der Fahrtrichtung (V) eines Kraftfahrzeugs ein vorderes und ein hinteres Ende (A, B) aufweist und daß die Befestigungsstelle (13, 32) von dem Schlitz (15) in Richtung auf das hintere Ende (B) der einen Führungsschiene (1) beabstandet ist.

3. Schienenlängsführung nach Anspruch 1 oder 2, **dadurch gekennzeichnet, daß** sich ein Bereich (31) des Befestigungsabschnittes (30, 31) in Schienenlängsrichtung (x) zu der Befestigungsstelle (13, 32) hin erstreckt.

4. Schienenlängsführung nach einem der vorhergehenden Ansprüche, **dadurch gekennzeichnet, daß** sich der Schlitz (15) in Schienenlängsrichtung (x) erstreckt.

5. Schienenlängsführung nach einem der vorhergehenden Ansprüche, **dadurch gekennzeichnet, daß** eine Verdrehsicherung vorgesehen ist, um ein Verdrehen des Haltewinkels (3) um die Befestigungsstelle (13, 32) zu verhindern.

6. Schienenlängsführung nach Anspruch 5, **dadurch gekennzeichnet, daß** die Verdrehsicherung durch ein Zusammenwirken des Haltewinkels (3) mit der einen Führungsschiene (1) gebildet wird.

7. Schienenlängsführung nach Anspruch 6, **dadurch gekennzeichnet, daß** die Stelle, an der der Haltewinkel (3) und die Führungsschiene (1) zusammenwirken, in Schienenlängsrichtung (x) von der Befestigungsstelle (13, 32) beabstandet ist.

8. Schienenlängsführung nach einem der Ansprüche 5 bis 7, **dadurch gekennzeichnet, daß** ein Anschlag (34) des Haltewinkels (3) zur Verdrehsicherung mit einem Gegenanschlag der einen Führungsschiene (1) zusammenwirkt.

9. Schienenlängsführung nach einem der Ansprüche 5 bis 7, **dadurch gekennzeichnet, daß** außerhalb der Befestigungsstelle (13, 32) ein zusätzliches Befestigungsmittel zur Verbindung des Haltewinkels (3) mit der einen Führungsschiene (1) vorgesehen ist.

10. Schienenlängsführung nach einem der vorhergehenden Ansprüche, **dadurch gekennzeichnet, daß** die Befestigungsstelle (13, 32) durch korrespondierende Befestigungsöffnungen in dem Haltewinkel (3) und in der einen Führungsschiene (1) gebildet ist und daß die beiden Befestigungsöffnungen (13, 32) von einem Befestigungsmittel (6) durchgriffen werden.

11. Schienenlängsführung nach einem der vorhergehenden Ansprüche, **dadurch gekennzeichnet, daß** die Befestigungsstelle (13, 32) zur Befestigung einer weiteren Baugruppe (5), z. B. eines Lagerbockes für eine Sitzhöhenverstelleinrichtung, an der einen Führungsschiene (1) dient.

12. Schienenlängsführung nach einem der vorhergehenden Ansprüche, **dadurch gekennzeichnet, daß** der Schlitz (15) einen Freischnitt (17) aufweist, um ein Einreißen der Führungsschiene (1) ausgehend von dem Schlitz (15) beim Auftreten großer Kräfte (F) an dem Haltewinkel (3) entgegenzuwirken.

13. Schienenlängsführung nach einem der vorhergehenden Ansprüche, **dadurch gekennzeichnet, daß** die eine Führungsschiene (1) im Querschnitt im wesentlichen U-förmig ausgebildet ist und daß der Schlitz (15) sich im Bereich des Überganges der Basisfläche (10) der einen Schiene (1) zu einem Schenkel (12) dieser Schiene (1) erstreckt.

14. Schienenlängsführung für einen Kraftfahrzeugsitz mit
- zwei längserstreckten, ineinander greifenden Führungsschienen (1, 2), von denen die eine entlang der anderen in Schienenlängsrichtung (x) verschiebbar ist,
- einem Haltewinkel (3) für ein Gurtschloss (4), der an der einen, verschiebbaren Führungsschiene (1) festgelegt ist,
- einem in der einen Führungsschiene (1) vorgesehenen Schlitz (15), durch den ein Befestigungsabschnitt (30, 31) des Haltewinkels (3) in einen von den beiden Führungsschienen (1, 2) umschlossenen Hohlraum geführt ist,
- mindestens einer Befestigungsstelle (13,32), an der der Befestigungsabschnitt (30, 31) des Haltewinkels (3) mit der einen Führungsschiene (1) verbunden ist, und
- einer Kraftangriffsstelle an einem Halteabschnitt (35) des Haltewinkels (3), an der die Gurtkräfte eines an dem Haltewinkel (3) befestigbaren Gurtschlosses (4) mit einer Kraftkomponente senkrecht zur Schienenlängsrichtung (x) angreifen können,
**dadurch gekennzeichnet,**
**dass** an der einen Führungsschiene (1) ein Stützelement (5a) derart angeordnet und befestigt ist, dass das Stützelement über einen seitlichen Rand (102) einer Oberfläche (10) der einen Führungsschiene (1) in Richtung auf den Haltewinkel (3) übersteht und der Haltewinkel (3) mit dem Stützelement (5a) in Eingriff gerät um die Belastung im Eingriffsbereich des Haltewinkels (3) in den Schlitz (15) der Führungsschiene (1) zu reduzieren, wenn die Gurtkräfte an dem Halteabschnitt (35) angreifen und der Halteabschnitt (35) in Richtung der Gurtkraft (F) bewegt wird

15. Schienenlängsführung nach Anspruch 14, **dadurch gekennzeichnet, dass** der Halteabschnitt (35) von dem Befestigungsabschnitt (30) des Haltewinkels (3) abgewinkelt ist.

16. Schienenlängsführung nach Anspruch 14 oder 15, **dadurch gekennzeichnet, dass** der Halteabschnitt (35) sich entlang einer Richtung erstreckt, die im Wesentlichen senkrecht zur Schienenlängsrichtung (x) verläuft.

17. Schienenlängsführung nach einem der Ansprüche 14 bis 16, **dadurch gekennzeichnet, dass** das Stützelement (5a) Bestandteil eines an der einen Schiene (1) befestigten Lagerelementes (5) ist.

18. Schienenlängsführung nach Anspruch 17, **dadurch gekennzeichnet, dass** das Lagerelement (5) als Lagerbock für ein Sitzuntergestell ausgebildet ist.

19. Schienenlängsführung nach einem der Ansprüche 14 bis 18, **dadurch gekennzeichnet, dass** die Gurtkräfte (F) eine erste und eine zweite Kraftkomponente (F_{H}, F_{V}) aufweisen, die senkrecht zueinander verlaufen und die jeweils senkrecht zur Schienenlängsrichtung (x) verlaufen.

20. Schienenlängsführung nach einem der Ansprüche 14 bis 19, **dadurch gekennzeichnet, dass** der Halteabschnitt (35) aufgrund der Gurtkräfte (F) eine Schwenkbewegung ausführt, insbesondere eine Schwenkbewegung um die Schienenlängsrichtung (x).

21. Schienenlängsführung nach Anspruch 20, **dadurch gekennzeichnet, dass** die Schwenkbewegung durch Verbiegen des Haltewinkels (3) unter der Wirkung der Gurtkräfte (F) erzeugbar ist.

22. Schienenlängsführung nach einem der Ansprüche 14 bis 21, **dadurch gekennzeichnet, dass** das Stützelement (5a) auf der Oberfläche (10) der einen Führungsschiene (1) angeordnet ist, über deren seitlichen Rand (102) es übersteht.

23. Schienenlängsführung nach Anspruch 14 und 22, **dadurch gekennzeichnet, dass** das Stützelement (5a) in Richtung auf den Halteabschnitt (35) des Haltewinkels (3) über den seitlichen Rand (102) der Oberfläche (10) der einen Führungsschiene (1) übersteht.

24. Schienenlängsführung nach einem der Ansprüche 14 oder 23, **dadurch gekennzeichnet, dass** der überstehende Bereich des Stützelementes (5a) einen abgerundeten Teilbereich (50a) ausweist, an den sich der Haltewinkel (3) anlegt, wenn er mit dem Stützelement (5a) in Eingriff tritt.

25. Schienenlängsführung nach einem der Ansprüche 14 bis 24, **dadurch gekennzeichnet, dass** die eine Führungsschiene (1) - bezogen auf den in ein Kraftfahrzeug eingebauten Zustand der Schienenlängsführung (1, 2) - eine Oberschiene bildet.

26. Schienenlängsführung nach einem der Ansprüche 14 bis 25, **dadurch gekennzeichnet, dass** der Haltewinkel (3) - bezogen auf den in ein Kraftfahrzeug eingebauten Zustand der Schienenlängsführung (1, 2) - nach oben von der Schienenlängsführung (1, 2) absteht.

27. Schienenlängsführung nach einem der Ansprüche 14 bis 26, **dadurch gekennzeichnet, dass** die Gurtkräfte (F) - bezogen auf den in ein Kraftfahrzeug eingebauten Zustand der Schienenlängsführung (1, 2) - eine Komponente (F_{V}) nach oben sowie eine Komponente (F_{H}) senkrecht zur Vertikalen und senkrecht zur Schienenlängsrichtung (x) aufweisen.

28. Schienenlängsführung nach Anspruch 15 oder einem der Ansprüche 16 bis 27, soweit rückbezogen auf Anspruch 15, **dadurch gekennzeichnet, dass** das Stützelement (5a) entlang einer dem Halteabschnitt (35) des Haltewinkels (3) zugewandten Längsseite an der einen Führungsschiene (1) befestigt ist.

29. Schienenlängsführung nach einem der Ansprüche 14 bis 28, **dadurch gekennzeichnet, dass** das Stützelement (5a) mittels einer Schweißverbindung (S, S') an der einen Führungsschiene (1) befestigt ist.

30. Schienenlängsführung nach einem der Ansprüche 14 bis 29, **dadurch gekennzeichnet, dass** der Befestigungsabschnitt (35) des Haltewinkels (3) an der einen Führungsschiene (1) mittels mindestens eines Befestigungselementes (6) befestigt ist, das in die eine Führungsschiene (1) und das Stützelement (5a) eingreift.

31. Schienenlängsführung nach Anspruch 30, **dadurch gekennzeichnet, dass** das Befestigungselement (6) durch eine Schraube gebildet wird.

32. Schienenlängsführung nach Anspruch 31, **dadurch gekennzeichnet, dass** die Schraube (6) mit ihrem Gewindeschaft (60) in eine mit einem Innengewinde versehene Befestigungsöffnung (52) des Stützelementes (5a) eingeschraubt ist.

33. Schienenlängsführung nach Anspruch 31 oder 32, **dadurch gekennzeichnet, dass** der Kopf (61) der Schraube (6) in den von den Führungsschienen (1, 2) umschlossenen Raum ragt.

34. Schienenlängsführung nach einem der Ansprüche 14 bis 33, **dadurch gekennzeichnet, dass** Mittel (16, 31) vorgesehen sind, die einem Verdrehen des Befestigungsabschnittes (30) des Haltewinkels (3) entgegenwirken, insbesondere einem Verdrehen um eine senkrecht zur Schienenlängsrichtung (x) verlaufende Achse.

35. Schienenlängsführung nach einem der Ansprüche 14 bis 34, **dadurch gekennzeichnet, dass** der Befestigungsabschnitt (30) des Haltewinkels (3) mit einem dem Halteabschnitt (35) abgewandten Endabschnitt (31) in einen weiteren Schlitz (16) der einen Führungsschiene (1) eingreift.

36. Schienenlängsführung nach Anspruch 35, **dadurch gekennzeichnet, dass** die Länge (I) des weiteren Schlitzes (16) in Schienenlängsrichtung (x) der Ausdehnung (a) des zugeordneten Endabschnittes (31) des Befestigungsabschnittes (30) des Haltewinkels (3) in dieser Richtung entspricht.

37. Schienenlängsführung nach Anspruch 35 oder 36, **dadurch gekennzeichnet, dass** der Befestigungsabschnitt (30) des Haltewinkels (3) sich mit mindestens einem Anschlag (33) senkrecht zur Schienenlängsrichtung (x) am Rand des weiteren Schlitzes (16) abstützt.

## Claims

1. Longitudinal guide rail for a motor vehicle seat with
- two elongated inter-engaging guide rails (1, 2) of which one is displaceable along the other in the longitudinal direction (x) of the rail,
- a retaining bracket (3) for a seat belt buckle (4) which is fixed on the one displaceable guide rail (1),
- a slot (15) provided in the one guide rail (1) through which a fixing section (30, 31) of the retaining bracket (3) is guided in a space enclosed by the two guide rails (1,2),
- at least one fixing point (13, 32) at which the fixing section (30, 31) of the retaining bracket (3) is connected by fastening means with the one guide rail (1), and
- a force engagement point on a retaining section (35) of the retaining bracket (3) at which the belt forces of a belt buckle (4) fixable on the retaining bracket (3) can engage
**characterised in that**
the fixing point (13, 32) is spaced from the slot (15), viewed in the longitudinal direction (x) of the rail and that the fixing section (30, 31) viewed in the longitudinal direction (x) of the rail extends beyond the slot (15) up to the fixing point (13, 32), to reduce the loading in the region in which the retaining bracket (3) engages in the slit (15) of the guide rail (1), when the belt force engages the retaining section (35).

2. Longitudinal guide rail according to claim 1, **characterised in that** the one guide rail (1) has in relation to the drive direction (V) of a motor vehicle a front end and a rear end (A, B) and that the fixing point (13, 32) is spaced from the slot (15) in the direction of the rear end (B) of the one guide rail (1).

3. Longitudinal rail guide according to claim 1 or 2, **characterised in that** a region (31) of the fixing section (30, 31) extends in the longitudinal direction (x) of the rail up to the fixing point (13, 32).

4. Longitudinal guide rail according to one of the preceding claims, **characterised in that** the slot (15) extends in the longitudinal direction (x) of the rail.

5. Longitudinal guide rail according to one of the preceding claims, **characterised in that** an anti-rotation lock is provided to prevent the retaining bracket (3) from turning about the fixing point (13, 32).

6. Longitudinal guide rail according to claim 5, **characterised in that** the anti-rotation lock is formed by the interaction between the retaining bracket (3) and the one guide rail (1).

7. Longitudinal guide rail according to claim 6, **characterised in that** the point at which the retaining bracket (3) and the guide rail (1) interact is spaced from the fixing point (13, 32) in the longitudinal direction (x) of the rail.

8. Longitudinal guide rail according to one of claims 5 to 7, **characterised in that** a stop (34) of the retaining bracket (3) interacts with a counter stop of the one guide rail (1) to provide the anti-rotation lock.

9. Longitudinal guide rail according to one of claims 5 to 7, **characterised in that** apart from the fixing point (13, 32) there is an additional fixing means for connecting the retaining bracket (3) to the one guide rail (1).

10. Longitudinal guide rail according to one of the preceding claims, **characterised in that** the fixing point (13, 32) is formed by corresponding fixing openings in the retaining bracket (3) and in the one guide rail (1) and that a fixing member (6) passes through the two fixing openings (13, 32).

11. Longitudinal guide rail according to one of the preceding claims, **characterised in that** the fixing point (13, 32) serves to fix a further structural assembly (5) e.g. a bearing block for a seat height adjuster on the one guide rail (1).

12. Longitudinal guide rail according to one of the preceding claims, **characterised in that** the slot (15) has a free cut section (17) in order to counteract the guide rail (1) splitting starting from the slot (15) when larger forces (F) appear on the retaining bracket (3).

13. Longitudinal guide rail according to one of the preceding claims, **characterised in that** the one guide rail (1) is formed with a substantially U-shaped cross-section and that the slot (15) extends in the region of the transition between the base surface (10) of the one rail (1) and an arm (12) of this rail (1).

14. Longitudinal guide rail for a motor vehicle seat with
- two elongated inter-engaging guide rails (1,2) of which one is displaceable along the other in the longitudinal direction (x) of the rail,
- a retaining bracket (3) for a belt buckle (4), which is fixed on the one displaceable guide rail (1),
- a slot (15) provided in the one guide rail (1) through which a fixing section (30,31) of the retaining bracket (3) is guided in a space enclosed by the two guide rails (1,2),
- at least one fixing point (13, 32) on which the fixing section (30, 31) of the retaining bracket (3) is connected to the one guide rail (1), and
- a force engagement point on a retaining section (35) of the retaining bracket (3) at which the belt forces of a belt buckle (4) fixable on the retaining bracket (3) can engage with a force component perpendicular to the longitudinal direction (X) of the rail,
**characterised in that**
a support element (5a) is mounted on the one guide rail (1) and is fixed so that the support element protrudes beyond a lateral edge (102) of a surface (10) of the one guide rail (1) in the direction of the retaining bracket (3) and the retaining bracket (3) engages with the support element (5a) to reduce the loading in the region in which the retaining bracket (3) engages in the slit (15) of the guide rail (1), when the belt force engages the retaining section (35) and its retaining section (35) is moved in the direction of the belt force (F).

15. Longitudinal guide rail according to claim 14, **characterised in that** the retaining section (35) is angled from the fixing section (30) of the retaining bracket (3).

16. Longitudinal guide rail according to claim 14 or 15, **characterised in that** the retaining section (35) extends along a direction which runs substantially perpendicular to the longitudinal direction (x) of the rail.

17. Longitudinal guide rail according to one of claims 14 to 16, **characterised in that** the support element (5a) is a constituent part of a bearing element (5) fixed on the one rail (1).

18. Longitudinal guide rail according to claim 17, **characterised in that** the bearing element (5) is formed as a bearing block for a seat base.

19. Longitudinal guide rail according to one of claims 14 to 18, **characterised in that** the belt forces (F) have a first and a second force component (F_{H}, F_{V}) which run perpendicular to each other and which each run perpendicular to the longitudinal direction (x) of the rail.

20. Longitudinal guide rail according to one of claims 14 to 19, **characterised in that** the retaining section (35) as a result of the belt forces (F) executes a swivel movement, more particularly a swivel movement about the longitudinal direction (x) of the rail.

21. Longitudinal guide rail according to claim 20, **characterised in that** the swivel movement can be produced through the retaining bracket (3) bending under the action of the belt forces (F).

22. Longitudinal guide rail according to one of claims 14 to 21, **characterised in that** the support element (5a) is mounted on the surface (10) of the one guide rail (1) beyond the side edge (102) of which it protrudes.

23. Longitudinal guide rail according to claim 14 and 22, **characterised in that** the support element (5a) projects in the direction of the retaining section (35) of the retaining bracket (3) beyond the side edge (102) of the surface (10) of the one guide rail (1).

24. Longitudinal guide rail according to one of claims 14 or 23, **characterised in that** the protruding region of the support element (5a) has a rounded region (50a) which the retaining bracket (3) contacts when it engages with the support element (5a).

25. Longitudinal guide rail according to one of claims 14 to 24, **characterised in that** the one guide rail (1) - in relation to the position of the longitudinal guide rail (1, 2) installed in the motor vehicle - forms a top rail.

26. Longitudinal guide rail according to one of claims 14 to 25, **characterised in that** the retaining bracket (3) protrudes upwards from the longitudinal guide rail (1, 2) - in relation to the position of the longitudinal guide rail (1, 2) installed in a motor vehicle.

27. Longitudinal guide rail according to one of claims 14 to 26, **characterised in that** the belt forces (F) - in relation to the position of the longitudinal guide rail (1, 2) installed in the motor vehicle - have a component (F_{V}) upwards as well as a component (F_{H}) perpendicular to the vertical and perpendicular to the longitudinal direction (x) of the rail.

28. Longitudinal guide rail according to claim 15 or to one of claims 16 to 27 insofar as they refer back to claim 15, **characterised in that** the support element (5a) is fixed on the one guide rail (1) along a longitudinal side facing the retaining section (35) of the retaining bracket (3).

29. Longitudinal guide rail according to one of claims 14 to 28, **characterised in that** the support element (5a) is fixed on the one guide rail (1) by means of a welded connection (S, S').

30. Longitudinal guide rail according to one of claims 14 to 29, **characterised in that** the fixing section (35) of the retaining bracket (3) is fixed on the one guide rail (1) by means of at least one fixing element (6) which engages in a guide rail (1) and the support element (5a).

31. Longitudinal guide rail according to claim 30, **characterised in that** the fixing element (6) is formed by a screw.

32. Longitudinal guide rail according to claim 31, **characterised in that** the screw (6) is screwed by its threaded shaft (60) into a fixing opening (52) of the support element (5a) which has an internal thread.

33. Longitudinal guide rail according to claim 31 or 32, **characterised in that** the head (61) of the screw (6) projects into the space enclosed by the guide rails (1, 2).

34. Longitudinal guide rail according to one of claims 14 to 33, **characterised in that** means (16, 31) are provided which counteract turning of the fixing section (30) of the retaining bracket (3), more particularly turning about an axis running perpendicular to the longitudinal direction (x) of the rail.

35. Longitudinal rail according to one of claims 14 to 34, **characterised in that** the fixing section (30) of the retaining bracket (3) engages by an end section (31) remote from the retaining section (35) into a further slot (16) of the guide rail (1).

36. Longitudinal guide rail according to claim 35, **characterised in that** the length (L) of the further slot (16) in the longitudinal direction (x) of the rail corresponds to the extension (a) of the associated end section (31) of the fixing section (30) of the retaining bracket (3) in this direction.

37. Longitudinal guide rail according to claim 35 or 36, **characterised in that** the fixing section (30) of the retaining bracket (3) is supported on the edge of the further slot (16) by at least one stop (33) perpendicular to the longitudinal direction (x) of the rail.

## Revendications

1. Guidage longitudinal à rails pour un siège de véhicule automobile, comportant :
- deux rails de guidage longitudinaux (1, 2) emboîtés l'un dans l'autre, dont un premier est mobile en translation le long de l'autre dans la direction longitudinale (x) des rails,
- une équerre de retenue (3) pour une serrure de ceinture (4), qui est immobilisée sur le premier rail de guidage mobile (1),
- une fente (15) prévue dans le premier rail de guidage (1), à travers laquelle est amenée une portion de fixation (30, 31) de l'équerre de retenue (3) dans un espace entouré par les deux rails de guidage (1, 2),
- au moins un emplacement de fixation (13, 32) auquel la portion de fixation (30, 31) de l'équerre de retenue (3) est reliée au premier rail de guidage (1) par des moyens de fixation, et
- un emplacement d'attaque de force sur une portion de retenue (35) de l'équerre de retenue (3), auquel peuvent attaquer les forces de ceinture d'une serrure de ceinture (4) susceptible d'être fixée sur l'équerre de retenue (3),
**caractérisé en ce que**
l'emplacement de fixation (13, 32), vu dans la direction longitudinale (x) des rails, est écarté de la fente (15) et **en ce que** la portion de fixation (30, 31), vue dans la direction longitudinale (x) des rails, s'étend au-delà de la fente (15) jusqu'à l'emplacement de fixation (13, 32), afin de réduire la charge dans la zone d'engagement de l'équerre de retenue (3) dans la fente (15) du rail de guidage (1) lorsque les forces de ceinture attaquent la portion de retenue (35).

2. Guidage longitudinal à rails selon la revendication 1, **caractérisé en ce que** le premier rail de guidage (1) présente une extrémité avant et une extrémité arrière (A, B) par rapport à la direction de conduite (V) d'un véhicule automobile, et **en ce que** l'emplacement de fixation (13, 32) est écarté de la fente (15) dans la direction de l'extrémité arrière (B) dudit premier rail de guidage (1).

3. Guidage longitudinal à rails selon la revendication 1 ou 2, **caractérisé en ce qu'**une zone (31) de la portion de fixation (30, 31) s'étend dans la direction longitudinale (x) des rails vers l'emplacement de fixation (13, 32).

4. Guidage longitudinal à rails selon l'une des revendications précédentes, **caractérisé en ce que** la fente (15) s'étend dans la direction longitudinale (x) des rails.

5. Guidage longitudinal à rails selon l'une des revendications précédentes, **caractérisé en ce qu'**il est prévu un blocage anti-rotation pour empêcher une rotation de l'équerre de retenue (3) autour de l'emplacement de fixation (13, 32).

6. Guidage longitudinal à rails selon la revendication 5, **caractérisé en ce que** le blocage anti-rotation est formé par coopération de l'équerre de retenue (3) avec le premier rail de guidage (1).

7. Guidage longitudinal à rails selon la revendication 6, **caractérisé en ce que** l'emplacement auquel l'équerre de retenue (3) et le rail de guidage (1) coopèrent est écarté de l'emplacement de fixation (13, 32) dans la direction longitudinale (x) des rails.

8. Guidage longitudinal à rails selon l'une des revendications 5 à 7, **caractérisé en ce que** pour le blocage anti-rotation, une butée (34) de l'équerre de retenue (3) coopère avec une contre-butée du premier rail de guidage (1).

9. Guidage longitudinal à rails selon l'une des revendications 5 à 7, **caractérisé en ce qu'**il est prévu à l'extérieur de l'emplacement de fixation (13, 32) un moyen de fixation additionnel pour relier l'équerre de retenue (3) au premier rail de guidage (1).

10. Guidage longitudinal à rails selon l'une des revendications précédentes, **caractérisé en ce que** l'emplacement de fixation (13, 32) est formé par des ouvertures de fixation correspondantes dans l'équerre de retenue (3) et dans le premier rail de guidage (1), et **en ce que** les deux ouvertures de fixation (13, 32) sont traversées par un moyen de fixation (6).

11. Guidage longitudinal à rails selon l'une des revendications précédentes, **caractérisé en ce que** l'emplacement de fixation (13, 32) sert à fixer un autre groupe structurel (5), par exemple un bloc support pour un dispositif de réglage en hauteur du siège, sur le premier rail de guidage (1).

12. Guidage longitudinal à rails selon l'une des revendications précédentes, **caractérisé en ce que** la fente (15) présente une découpe (17) pour s'opposer à une amorce de déchirure du rail de guidage (1) à partir de la fente (15) lors de l'application de forces élevées (F) sur l'équerre de retenue (3).

13. Guidage longitudinal à rails selon l'une des revendications précédentes, **caractérisé en ce que** le premier rail de guidage (1) est réalisé avec une section transversale sensiblement en forme de U, et **en ce que** la fente (15) s'étend dans la zone de la transition de la surface de base (10) du premier rail (1) vers une branche (12) de ce rail (1).

14. Guidage longitudinal à rails pour un siège de véhicule automobile, comportant
- deux rails de guidage longitudinaux (1, 2) emboîtés l'un dans l'autre, dont un premier est mobile en translation le long de l'autre dans la direction longitudinale (x) des rails,
- une équerre de retenue (3) pour une serrure de ceinture (4), qui est immobilisée sur le premier rail de guidage mobile (1),
- une fente (15) prévue dans le premier rail de guidage (1), à travers laquelle est amenée une portion de fixation (30, 31) de l'équerre de retenue (3) dans un espace creux entouré par les deux rails de guidage (1, 2),
- au moins un emplacement de fixation (13, 32) auquel la portion de fixation (30, 31) de l'équerre de retenue (3) est reliée au premier rail de guidage (1), et
- un emplacement d'attaque de force sur une portion de retenue (35) de l'équerre de retenue (3), auquel peuvent attaquer les forces de ceinture d'une serrure de ceinture (4) susceptible d'être fixée sur l'équerre de retenue (3), et ceci par une composante de force perpendiculaire à la direction longitudinale (x) des rails,
**caractérisé en ce que**
sur le premier rail de guidage (1) est agencé et fixé un élément de soutien (5a) de telle sorte que l'élément de soutien dépasse au-delà d'un bord latéral (102) d'une surface (10) du premier rail de guidage (1) en direction de l'équerre de retenue (3) et **en ce que** l'équerre de retenue (3) vient en engagement avec l'élément de soutien (5a), afin de réduire la charge dans la zone d'engagement de l'équerre de retenue (3) dans la fente (15) du rail de guidage (1) lorsque les forces de ceinture attaquent la portion de retenue (35) et que la portion de retenue (35) est déplacée en direction de la force de ceinture (F).

15. Guidage longitudinal à rails selon la revendication 14, **caractérisé en ce que** la portion de retenue (35) est coudée depuis la portion de fixation (30) de l'équerre de retenue (3).

16. Guidage longitudinal à rails selon la revendication 14 ou 15, **caractérisé en ce que** la portion de retenue (35) s'étend suivant une direction qui est sensiblement perpendiculaire à la direction longitudinale (x) des rails.

17. Guidage longitudinal à rails selon l'une des revendications 14 à 16, **caractérisé en ce que** l'élément de soutien (5a) fait partie d'un élément de montage (5) fixé sur le premier rail (1).

18. Guidage longitudinal à rails selon la revendication 17, **caractérisé en ce que** l'élément de montage (5) est réalisé sous forme de bloc support pour un bâti inférieur de siège.

19. Guidage longitudinal à rails selon l'une des revendications 14 à 18, **caractérisé en ce que** les forces de ceinture (F) présentent une première et une seconde composante de force (F_{H}, F_{V}) qui s'étendent perpendiculairement l'une à l'autre et chacune perpendiculairement à la direction longitudinale (x) des rails.

20. Guidage longitudinal à rails selon l'une des revendications 14 à 19, **caractérisé en ce qu'**en raison des forces de ceinture (F), la portion de retenue (35) exécute un mouvement de pivotement, en particulier un mouvement de pivotement autour de la direction longitudinale (x) des rails.

21. Guidage longitudinal à rails selon la revendication 20, **caractérisé en ce que** le mouvement de pivotement peut être généré par flexion de l'équerre de retenue (3) sous l'effet des forces de ceinture (F).

22. Guidage longitudinal à rails selon l'une des revendications 14 à 21, **caractérisé en ce que** l'élément de soutien (5a) est agencé sur la surface (10) du premier rail de guidage (1) et fait saillie au-delà de son bord latéral (102).

23. Guidage longitudinal à rails selon l'une des revendications 14 à 22, **caractérisé en ce que** l'élément de soutien (5a) dépasse en direction de la portion de retenue (35) de l'équerre de retenue (3) au-delà du bord latéral (102) de la surface (10) du premier rail de guidage (1).

24. Guidage longitudinal à rails selon l'une des revendications 14 à 23, **caractérisé en ce que** la zone en dépassement de l'élément de soutien (5a) présente une zone partielle arrondie (50a) contre laquelle prend appui l'équerre de retenue (3) lorsqu'elle est en engagement avec l'élément de soutien (5a).

25. Guidage longitudinal à rails selon l'une des revendications 14 à 24, **caractérisé en ce que** le premier rail de guidage (1) forme un rail supérieur dans l'état monté du guidage longitudinal à rails (1, 2) dans un véhicule automobile.

26. Guidage longitudinal à rails selon l'une des revendications 14 à 25, **caractérisé en ce que** l'équerre de retenue (3) fait saillie vers le haut depuis le guidage longitudinal à rails (1, 2) dans l'état monté du guidage longitudinal à rails (1, 2) dans un véhicule automobile.

27. Guidage longitudinal à rails selon l'une des revendications 14 à 26, **caractérisé en ce que** les forces de ceinture (F) présentent une composante (F_{V}) vers le haut ainsi qu'une composante (F_{H}) perpendiculaire à la verticale et perpendiculaire à la direction longitudinale (x) des rails, dans l'état monté du guidage longitudinal à rails (1, 2) dans un véhicule automobile.

28. Guidage longitudinal à rails selon la revendication 15 ou selon l'une des revendications 16 à 27 prises en dépendance de la revendication 15, **caractérisé en ce que** l'élément de soutien (5a) est fixé sur le premier rail de guidage (1) le long d'un côté longitudinal tourné vers la portion de retenue (35) de l'équerre de retenue (3).

29. Guidage longitudinal à rails selon l'une des revendications 14 à 28, **caractérisé en ce que** l'élément de soutien (5a) est fixé sur le premier rail de guidage (1) par une liaison soudée (S, S').

30. Guidage longitudinal à rails selon l'une des revendications 14 à 29, **caractérisé en ce que** la portion de fixation (35) de l'équerre de retenue (3) est fixée sur le premier rail de guidage (1) au moyen d'au moins un élément de fixation (6) qui s'engage dans le premier rail de guidage (1) et dans l'élément de soutien (5a).

31. Guidage longitudinal à rails selon la revendication 30, **caractérisé en ce que** l'élément de fixation (6) est formé par une vis.

32. Guidage longitudinal à rails selon la revendication 31, **caractérisé en ce que** la vis (6) est vissée par sa tige filetée (60) dans une ouverture de fixation (52) de l'élément de soutien (5a), qui est pourvue d'un taraudage.

33. Guidage longitudinal à rails selon la revendication 31 ou 32, **caractérisé en ce que** la tête (61) de la vis (6) pénètre dans l'espace entouré par les rails de guidage (1, 2).

34. Guidage longitudinal à rails selon l'une des revendications 14 à 33, **caractérisé en ce qu'**il est prévu des moyens (16, 31) qui s'opposent à une rotation de la portion de fixation (30) de l'équerre de retenue (3), en particulier à une rotation autour d'un axe s'étendant perpendiculairement à la direction longitudinale (x) des rails.

35. Guidage longitudinal à rails selon l'une des revendications 14 à 34, **caractérisé en ce que** la portion de fixation (30) de l'équerre de retenue (3) s'engage, par une portion d'extrémité (31) détournée de la portion de retenue (35), dans une autre fente (16) du premier rail de guidage (1).

36. Guidage longitudinal à rails selon la revendication 35, **caractérisé en ce que** la longueur (1) de l'autre fente (16) dans la direction longitudinale (x) des rails correspond à l'extension (a) de la portion d'extrémité associée (31) de la portion de fixation (30) de l'équerre de retenue (3) dans cette direction.

37. Guidage longitudinal à rails selon la revendication 35 ou 36, **caractérisé en ce que** la portion de fixation (30) de l'équerre de retenue (3) prend appui contre le bord de l'autre fente (16) par au moins une butée (33) perpendiculairement à la direction longitudinale (x) des rails.
